# EUROPÄISCHE PATENTSCHRIFT

(11) **EP 1 147 949 B1**
(45) Veröffentlichungstag und Bekanntmachung des Hinweises auf die Patenterteilung: **21.07.2004**
(21) Anmeldenummer: 01107406.9
(22) Anmeldetag: 26.03.2001
(51) Int. Cl.: B60R 21/20

(54) **Gassackmodul**
Air bag module
Module de sac de sécurité gonflable

(30) Priorität: 18.04.2000 DE 20007141 U
(43) Veröffentlichungstag der Anmeldung: 24.10.2001
(73) Patentinhaber: TRW Automotive GmbH, 73553 Alfdorf (DE)
(72) Erfinder: Kolb, Klaus, 73527 Schwäbisch Gmünd (DE)
(74) Vertreter: Kitzhofer, Thomas, Dipl.-Ing.

(56) Entgegenhaltungen:
- EP-A- 0 952 044
- EP-A- 0 965 497
- EP-A- 0 978 422
- WO-A-99/42334
- WO-A-99/51457
- US-A- 5 772 238

## Beschreibung

Die Erfindung betrifft ein Gassackmodul für ein Fahrzeuginsassen-Rückhaltesystem, nach dem Oberbegriff des Anspruchs 1.

Seitengassäcke, die bei einem seitlichen Aufprall auf ein Fahrzeug den Kopf eines Fahrzeuginsassen vor Verletzungen schützen, werden inzwischen serienmäßig in Kraftfahrzeuge eingebaut. In einer bekannten Ausführung sind solche Gassäcke entlang des Dachrahmens des Fahrzeugs angebracht und entfalten sich z.B. in der Art eines Vorhangs zwischen dem Seitenfenster und dem Kopf des Fahrzeuginsassen.

Wichtig ist, daß der Gassack bis zu seiner Entfaltung vollständig geschützt ist, um Beschädigungen zu vermeiden. Zu diesem Zweck wird der Gassack in einem oft aus Kunststoff im Spritzgußverfahren gefertigten Gehäuse angeordnet, dessen Seitenteile auch gleichzeitig einen sogenannten Schußkanal bilden, der bei Aktivierung des Gassackmoduls die Entfaltungsrichtung des Gassacks vorgibt. Um die Herstellungskosten zu reduzieren, ist es günstig, das Gehäuse aus zwei Teilen zu fertigen, zum Beispiel einem hier als (Fahrzeug-)rahmennahen Seitenteil bezeichneten und einem hier als (Fahrgast-)innenraumnahen Seitenteil bezeichneten Kunststoffteil. Das Gassackmodul ist dabei so am Fahrzeug befestigt, zum Beispiel an dessen Dachrahmen, daß das rahmennahe Seitenteil zur nächstgelegenen Fahrzeugwand bzw. zum Dachrahmen zeigt und das innenraumnahe Seitenteil zum Fahrzeuginnenraum gerichtet ist. Ein derartiges Gehäuse ist z.B. in der EP 0 952 044 A1 beschrieben. Hier sind die Seitenteile an ihren Rändern über Klipsverbindungen aneinander befestigt. Zum Öffnen des Gehäuses für die Freigabe des Gassacks ist es daher erforderlich, daß die Klipsverbindung so ausgelegt ist, daß sich das Gehäuse durch den vom Gassack ausgeübten Druck sicher öffnet.

Die gattungs bildende EP-A-0 978 422 zeigt ein Gassackmodul mit einem aus zwei Bauteilen zusammengesetzten Gehäuse. Ein rahmennahes erstes Gehäuseteil ist als Energieabsorptionselement ausgebildet, das sich bei einem Aufprall eines Fahrzeuginsassen auf das Gassackmodul verformt. Das zweite Gehäuseteil ist eine Abdeckung, die auf das erste Gehäuseteil aufgesteckt ist, wobei die konkav gebogenen äußeren Seitenränder des zweiten Gehäuseteils von den konvex gebogenen äußeren Seitenränder des ersten Gehäuseteils gehalten werden.

Die Erfindung schlägt ein Gassackmodul mit einem Gehäuse vor, das sowohl ein sicheres Öffnen zur Freigabe des Gassacks als auch eine einfache Montage des Gassackmoduls ermöglicht.

Dies wird bei einem Gassackmodul der oben genannten Art durch die Merkmale des Anspruchs 1 erreicht. Aufgrund der Elastizität des innenraumnahen Seitenteils läßt sich dieses leicht aufbiegen, um es auf das rahmenahe Seitenteil zu stecken, und es fixiert sich dann im montierten Zustand, wenn beide Seitenteile aufeinandergesteckt sind, durch die Federwirkung. Auf diese Weise wird die Montage des Gassackmoduls vereinfacht. Aufgrund seiner Elastizität kann das innnenraumnahe Seitenteil bei der Entfaltung des Gassacks von diesem zur Seite gedrückt werden, um den Weg freizugeben. Dank der Überlappung, die durch das Umgreifen der Randabschnitte entsteht, ist das Gehäuse vor der Aktivierung des Gassackmoduls vollständig geschlossen und schützt den Gassack vor Verschmutzung und Beschädigung. Beim erfindungsgemäßen Modul bilden die zwei Halbschalen, die sich zum Gehäuse ergänzen, als Ganzes eine Steckverbindung, was einen besseren Zusammenhalt der Gehäuseteile ergibt als bei in Abständen angeformten Zapfen, die die Steckverbindung bilden.

Durch des Scharnier im innenraumnahen Seitenteil kann ein Abschnitt dieses Seitenteils zum Öffnen des Gehäuses nach außen geklappt werden. Diese Ausgestaltung erleichtert das Öffnen des Gehäuses, um den Gassack austreten zu lassen. Wird das Gassackmodul aktiviert, drückt der sich entfaltende Gassack auf die unteren Enden und damit auf die unteren Randabschnitte der beiden Seitenteile, woraufhin das innenraumnahe Seitenteil nach außen aufgedrückt wird und an seinem Scharnier in Richtung des Fahrzeuginnenraums aufklappt, um den Gassack freizugeben. Das Scharnier ist vorzugsweise etwa in der Mitte des innenraumnahen Seitenteils angeordnet.

Bevorzugt ist das Scharnier ein Filmscharnier, das durch eine Verringerung der Wandstärke des Seitenteils in diesem Bereich erreicht wird.

Das rahmennahe Seitenteil ist bevorzugt formstabil ausgebildet. Vorzugsweise weist das rahmennahe Seitenteil eine Grundplatte auf, an der sich seine Randabschnitte anschließen, und die Randabschnitte des innnenraumnahen Seitenteils greifen im montierten Zustand vor einer Aktivierung des Gassackmoduls an der Rückseite der Grundplatte an. Auf diese Weise wird sichergestellt, daß die Randabschnitte des innenraumnahen Seitenteils das rahmennahe Seitenteil soweit hintergreifen, daß die beiden Seitenteile miteinander verbunden bleiben.

Vorzugsweise weisen die Seitenteile einen C-förmigen Querschnitt auf. Auf diese Weise können die geraden Grundplatten der Seitenteile einen Schußkanal für den Gassack formen, während über die gebogenen Randabschnitte die Verbindung der beiden Seitenteile miteinander und ein Verschließen des Gehäuses erfolgen kann.

In einer bevorzugten Ausführungsform der Erfindung sind die Seitenteile im Bereich der Randabschnitte nur mit dem klammerartigen Umgriff aneinander fixiert. Dies dient der Vereinfachung der Montage der beiden Seitenteile, da keine Klipsverbindungen in Eingriff gebracht werden müssen. Die beiden Seitenteile gehen durch das Umgreifen des rahmennahen Seitenteils durch das innenraumnahe Seitenteil eine Rastverbindung ein, die die beiden Seitenteile miteinander verbindet. Ein weiterer Vorteil liegt darin, daß zum Öffnen des Gehäuses beim Austreten des Gassacks keine Klipsverbindung gelöst werden, sondern nur die unteren Randabschnitte der Seitenteile gegeneinander verschoben werden müssen.

Der Querschnitt der Randabschnitte ist vorzugsweise kreisbogenförmig. Besonders bevorzugt weisen die Querschnitte der jeweiligen überlappenden Randabschnitte des rahmennahen Seitenteils und des innenraumnahen Seitenteils konzentrische Kreisbögen auf. Mit anderen Worten sind die kreisbogenförmigen Randabschnitte der jeweils unteren und oberen Enden des innenraumnahen und des rahmennahen Seitenteils so aufeinander abgestimmt, daß nach der Montage Abschnitte der jeweiligen Randabschnitte direkt aufeinander liegen. So ist das Gehäuse geschlossen und der Gassack vor Verschmutzung und Beschädigung geschützt.

Zur Vereinfachung der Montage des Gassackmoduls ist in einer bevorzugten Ausführungsform eine Vorrichtung vorgesehen, über die die Seitenteile während des Zusammensetzens der Seitenteile aneinander fixiert werden können. Auf einfache Weise läßt sich eine solche Vorrichtung dadurch realisieren, daß an einem der Seitenteile Dome angeformt sind, die Ausnehmungen aufweisen, in die am anderen Seitenteil angeformte Stifte bei der Montage des Gassackmoduls eingreifen und so ein unerwünschtes Verschieben der Seitenteile gegeneinander verhindern können.

Da die Rastverbindung, die durch das Umgreifen des rahmennahen Seitenteils durch das innenraumnahe Seitenteil zustande kommt, im allgemeinen nicht ausreichend ist, um die Gehäuseteile während des Entfalten des Gassacks aneinander befestigt zu halten, ist eine weitere Befestigungsvorrichtung notwendig. Diese Befestigungsvorrichtung ist bevorzugt eine Klemmverbindung, die vorzugsweise außerhalb der überlappenden Randabschnitte angeordnet ist.

In einer bevorzugten Ausführungsform der Erfindung weist das rahmennahe Seitenteil angeformte Dome mit Ausnehmungen auf und das innenraumnahe Seitenteil kann vorzugsweise über Kunststoffnägel, die mit den Ausnehmungen eine Verbindung eingehen können, auf einfache und kostengüstige Weise am rahmennahen Seitenteil befestigt werden.

Weitere Merkmale und Vorteile der Erfindung gehen aus der nachfolgenden Beschreibung eines Ausführungsbeispiels in bezug auf die beigefügten Zeichnungen hervor. In den Zeichnungen zeigen:
Figur 1 einen Schnitt durch ein erfmdungsgemäßes Gassackmodul, und
Figur 2 einen Schnitt durch ein erfindungsgemäßes Gassackmodul auf Höhe einer Befestigungsvorrichtung, mit eingelegtem Gassack.

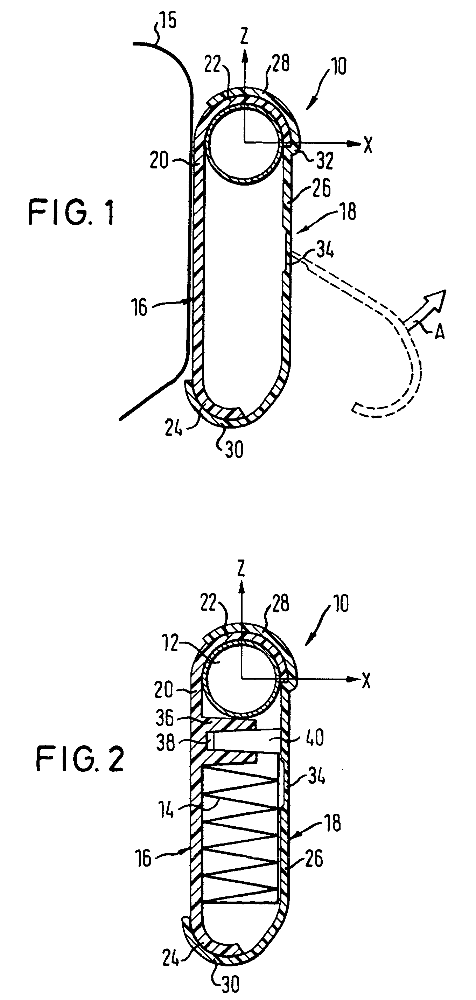

In den Figuren ist ein Seitengassackmodul 10 im montierten, d.h. zusammengesetzten Zustand, gezeigt. Das Gassackmodul 10 weist eine Gaslanze 12 und einen zusammengelegten Gassack 14 auf, der über Öffnungen in der Gaslanze befüllt werden kann. Aus Gründen der Veranschaulichung ist der zusammengelegte Gassack nur in Figur 2 dargestellt. Gaslanze 12 und Gassack 14 sind von einem langgestreckten, längs des Dachrahmens verlaufenden Gehäuse umgeben, das aus einem rahmennahen Seitenteil 16 und einem innenraumnahen Seitenteil 18 besteht.

Das Gassackmodul 10 ist an einem in Fig. 2 schematisch gezeigten Fahrzeugteil 15, z.B. einem Dachrahmen, auf bekannte Weise befestigt, und zwar so, daß das rahmennahe Seitenteil 16 an dem Fahrzeugteil angebracht wird, während das innenraumnahe Seitenteil 18 dem Innenraum des Fahrzeugs zugewandt ist. In den Figuren ist dies durch die Pfeilrichtung X, die in Richtung zum Fahrzeuginnenraum zeigt, und die Pfeilrichtung Z, die vertikal nach oben zeigt, veranschaulicht.

Das rahmennahe Seitenteil 16 weist eine nach unten gerichtete Grundplatte 20 auf, an die sich ein oberer Randabschnitt 22 mit kreisbogenförmigem Querschnitt anschließt, wobei sich der Randabschnitt 22 in x-Richtung etwa über einen Halbkreis erstreckt. Am unteren Ende der Grundplatte 20 schließt sich ein unterer Randabschnitt 24 an, ebenfalls mit kreisbogenförmigem Querschnitt, der sich in etwa über einen Viertelkreis erstreckt. Das rahmennahe Seitenteil 16 ist vorzugsweise aus einem formstabilen Kunststoff mit einer relativ dicken Wandstärke von z.B. 2 mm gespritzt.

Das innenraumnahe Seitenteil 18 weist ebenfalls eine sich nach unten erstreckende Grundplatte 26 auf, an die sich oben ein oberer Randabschnitt 28 und unten ein unterer Randabschnitt 30 anschließen. Der obere Randabschnitt 28 erstreckt sich vorzugsweise über annähernd 120°, während der untere Randabschnitt 30 bevorzugt einen etwa halbkreisförmige Querschnitt aufweist.

Das innenraumnahe Seitenteil ist aus einem elastischen Kunststoff mit etwas geringeren Wandstärken als das rahmennahe Seitenteil gebildet, zum Beispiel mit einer Wandstärke von 1,5 mm.

Beide Seitenteile werden vorzugsweise im Spritzgußverfahren gefertigt.

Am Übergang zwischen der Grundplatte 26 und dem oberen Randabschnitt 28 weist das innenraumnahe Seitenteil 18 einen Vorsprung 32 auf, der im montierten Zustand am Außenrand des oberen Randabschnitts 22 des rahmennahen Seitenteils 16 anliegt und dazu dient, die Position des innenraumnahen Seitenteils 18 auf dem rahmennahen Seitenteil 16 festzulegen.

Die Randabschnitte 28 und 30 des innenraumnahen Seitenteils 18 hintergreifen das rahmennahe Seitenteil 16, wobei sich die Randabschnitte 28, 30 im wesentlichen bis auf die Rückseite der Grundplatte 20 erstrecken und so eine Klammerwirkung hervorrufen. Der Überlappungsbereich der beiden unteren Randabschnitte 24 und 30 ist dabei aufgrund der geringeren Erstreckung des Randabschnittes 24 des rahmennahen Seitenteils 16 geringer als die Überlappung der beiden oberen Randabschnitte 22 und 28.

Das innenraumnahe Seitenteil 18 weist etwa in der Mitte seiner Grundplatte 26 ein Filmscharnier 34 auf, das als Bereich mit verringerter Wandstärke, von z.B. 0,8 mm, ausgebildet ist. An diesem Filmscharnier 34 kann der untere Teil des innenraumnahen Seitenteils 18 zum Innenraum hin in Pfeilrichtung A aufklappen. Dieser Zustand ist in Fig. 1 in gestrichelten Linien gezeigt.

Außerhalb der Randabschnitte sind Vorrichtungen zur Fixierung der beiden Seitenteile 16, 18 während der Montage angeordnet (siehe Fig. 2). Das rahmennahe Seitenteil 16 weist zapfenartige Dome 36 mit konusförmigen Ausnehmungen 38 auf, die einstückig mit dem Seitenteil 16 ausgebildet sein können. Die Ausnehmungen weisen vorzugsweise einen Konuswinkel von 5° auf. Am innenraumnahen Seitenteil 18 sind entsprechende Stifte 40 angeformt, die mit den Ausnehmungen 38 eine Klemmverbindung eingehen können. Vorzugsweise sind mehrere Fixierungsvorrichtungen vorgesehen, die in etwa im Abstand von 250 mm in Längsrichtung (senkrecht zur gezeigten Schnittebene) angeordnet sind. Die Funktion dieser Fixierungsvorrichtung wird weiter unten näher beschrieben.

Um die beiden Seitenteile sicher aneinander zu befestigen, sind weitere (nicht gezeigte) Befestigungsvorrichtungen vorgesehen. Vorzugsweise bestehen diese zum einen Teil ebenfalls aus am rahmennahen Seitenteil angeformten Domen, die sich allerdings weiter in Richtung des innenraumnahen Seitenteils erstrecken als die Dome 36, so daß der Abstand zwischen dem freien Ende des Doms und der Innenseite der Grundplatte des innenraumnahen Seitenteils etwa 2 mm beträgt. Auch diese Dome weisen Ausnehmungen auf, allerdings mit einem kleineren Durchmesser als die Ausnehmungen 38. Diese Dome sind etwa im Abstand von 300 mm in Längsrichtung angeordnet. Durch entsprechende Öffnungen im innenraumnahen Seitenteil werden Kunststoffnägel eingebracht, um über die Klemmwirkung der Kunststoffnägel in den Ausnehmungen eine feste Verbindung der beiden Seitenteile miteinander zu erzielen.

Selbstverständlich sind auch andere Fixierungs- und Befestigungsvorrichtungen denkbar, insbesondere können die Vorsprünge oder Stifte auch am jeweils anderen als dem hier beschriebenen Seitenteil befestigt sein. Im hier gezeigten Beispiel sind die Fixierungs- und Befestigungsvorrichtungen direkt unterhalb der Gaslanze angebracht, aber auch andere Anordnungen fallen natürlich unter den Rahmen der Erfindung.

Zur Montage des Gassackmoduls 10 wird das rahmennahe Seitenteil 16 waagerecht hingelegt und an einer nicht gezeigten Unterlage fixiert, daraufhin werden die Gaslanze 12 und der Gassack 14 eingelegt und auf bekannte Weise befestigt. Danach wird das innenraumnahe Seitenteil 18 beginnend mit dem unteren Randabschnitt 30 über das rahmennahe Seitenteil 16 und den eingelegten Gassack 14 und die Gaslanze 12 montiert, wobei das innenraumnahe Seitenteil 18 beim anschließenden Andrücken des Seitenteils 18 an das Seitenteil 16 zunächst aufgebogen wird, so daß der obere Randabschnitt 28 über den oberen Randabschnitt 22 des rahmennahen Seitenteils 16 schnappen kann und den unteren Randabschnitt 24 klammerartig umgreift. Durch die elastische Klemmwirkung der Randabschitte 28, 30 des innenraumnahen Seitenteils 18 über dem rahmennahen Seitenteil 16 entsteht eine Rastverbindung, die das innenraumseitige Seitenteil am rahmenseitigen Seitenteil 16 befestigt hält.

Um die richtige Ausrichtung der Seitenteile gegeneinander in Längsrichtung zu erreichen und eine Vorfixierung der Seitenteile gegeneinander zu erzielen, werden während des Aufsetzens des innenraumnahen Seitenteils 18 auf das rahmennahe Seitenteil 16 die Stifte 40 zunächst in die Ausnehmungen 38 eingeführt und dann der Randabschnitt 28 über den Randabschnitt 22 geführt. Die Stifte 40 werden in den Ausnehmungen 38 verklemmt.

Schließlich werden Kunststoffnägel (nicht gezeigt) durch nicht gezeigte Öffnungen in der Grundplate 26 des innenraumnahen Seitenteils 18 in die Ausnehmungen der oben beschriebenen weiteren Dome (nicht gezeigt) eingepreßt, um auf diese Weise die beiden Seitenteile dauerhaft aneinander zu befestigen.

Bei der Aktivierung des Gassackmoduls 10 strömt Gas durch die Gaslanze 12 in den Gassack 14 ein, und dieser beginnt sich zu entfalten. Die Grundplatten 20, 26 der beiden Seitenteile 16, 18 geben dabei durch die Bildung eines Schußkanals die Entfaltungsrichtung für den Gassack 14 vor. Durch den Druck, den der sich entfaltende Gassack 14 auf den unteren Randabschnitt 30 des innenraumnahen Seitenteils 18 ausübt, schwingt der untere Teil des innenraumnahen Seitenteils 18 am Filmscharnier 34 in Richtung des Fahrzeuginnenraums auf (Pfeilrichtung A in Fig. 1), und der Gassack kann durch die so entstehende Öffnung in den Innenraum austreten.

## Patentansprüche

1. Gassackmodul für ein Fahrzeuginsassen-Rückhaltesystem, insbesondere ein sich längs des Dachrahmens erstreckendes Seitengassackmodul, mit einem Gassack (14) und einem Gehäuse mit zwei separaten Seitenteilen (16, 18), die einen Schußkanal für den Gassack (14) definieren, wobei ein rahmennahes Seitenteil (16) und ein innenraumnahes Seitenteil (18) vorgesehen sind, die jeweils an ihren oberen und unteren Enden Randabschnitte (22, 24, 28, 30) aufweisen, und wobei das innenraumnahe Seitenteil (18) elastisch ausgebildet ist und eine auf die Form des rahmennahen Seitenteils (16) abgestimmte Form aufweist, **dadurch gekennzeichnet, daß** das innenraumnahe Seitenteil (18) ein Scharnier (34) aufweist, so daß ein Abschnitt des innenraumnahen Seitenteils (18) zum Öffnen des Gehäuses nach außen geklappt werden kann, daß das innenraumnahe Seitenteil (18) nur außenseitig am rahmennahen Seitenteil (18) anliegt sowie dieses klammerartig umgreift und daß die Randabschnitte (28, 30) des innenraumnahen Seitenteils (18) die Randabschnitte (22, 24) des rahmennahen Seitenteils (16) hintergreifen und so eine Klammerwirkung hervorrufen.

2. Gassackmodul nach Anspruch 1, **dadurch gekennzeichnet, daß** das rahmennahe Seitenteil (16) eine Grundplatte (20) aufweist und daß die Randabschnitte (28, 30) des innenraumnahen Seitenteils (18) in einem montierten Zustand vor einer Aktivierung des Gassackmoduls (10) an der Rückseite der Grundplatte (20) angreifen.

3. Gassackmodul nach einem der vorhergehenden Ansprüche, **dadurch gekennzeichnet, daß** die Seitenteile (16, 18) jeweils einen C-förmigen Querschnitt aufweisen.

4. Gassackmodul nach einem der vorhergehenden Ansprüche, **dadurch gekennzeichnet, daß** die Randabschnitte (22, 24, 28, 30) der Seitenteile (16, 18) im montierten Zustand nur durch das klammerartige Umgreifen aneinander fixiert sind.

5. Gassackmodul nach einem der vorhergehenden Ansprüche, **dadurch gekennzeichnet, daß** der Querschnitt der Randabschnitte (22, 24, 28, 30) kreisbogenförmig ist.

6. Gassackmodul nach Anspruch 5, **dadurch gekennzeichnet, daß** im montierten Zustand die Querschnitte der jeweiligen überlappenden Randabschnitte (22, 28; 24, 30) des rahmennahen Seitenteils (16) und des innenraumnahen Seitenteils (18) konzentrische Kreisbögen sind.

7. Gassackmodul nach einem der vorhergehenden Ansprüche, **dadurch gekennzeichnet, daß** das Scharnier ein Filmscharnier (34) ist.

8. Gassackmodul nach einem der vorhergehenden Ansprüche, **dadurch gekennzeichnet, daß** wenigstens eine Vorrichtung (36, 38, 40) vorgesehen ist, um die Seitenteile (16, 18) während des Zusammensetzens der Seitenteile aneinander zu fixieren.

9. Gassackmodul nach Anspruch 8, **dadurch gekennzeichnet, daß** die Vorrichtung (36, 38, 40) aus an einem der Seitenteile (16, 18) angeformten Domen (36) mit Ausnehmungen (38), in die am anderen Seitenteil angeformte Stifte (40) eingreifen können, besteht.

10. Gassackmodul nach einem der vorhergehenden Ansprüche, **dadurch gekennzeichnet, daß** wenigstens eine Befestigungsvorrichtung vorgesehen ist, über die die Seitenteile (16, 18) außerhalb der überlappenden Randabschnitte (22, 24, 28, 30) miteinander verbunden sind.

11. Gassackmodul nach Anspruch 10, **dadurch gekennzeichnet, daß** die Befestigungsvorrichtung eine Klemmvorrichtung (36, 38, 40) ist.

12. Gassackmodul nach einem der Ansprüche 10 und 11, **dadurch gekennzeichnet, daß** das rahmennahe Seitenteil (16) Dome mit Ausnehmungen aufweist und daß das innenraumnahe Seitenteil (18) über Nägel, die mit den Ausnehmungen (38) eine Verbindung eingehen können, am rahmennahen Seitenteil (16) befestigt werden kann.

## Claims

1. A gas bag module for a vehicle occupant restraint system, in particular a side gas bag module extending along the roof frame, the gas bag module comprising a gas bag (14) and a housing with two separate side pieces (16, 18), which define an ejection channel for the gas bag (14), a side piece (16) close to the frame and a side piece (18) close to the interior being provided, which each have marginal sections (22, 24, 28, 30) at their upper and lower ends, and the side piece (18) close to the interior being formed to be elastic and having a shape adapted to the shape of the side piece (16) close to the frame, **characterized in that** the side piece (18) close to the interior has a hinge (34) so that a section of the side piece (18) close to the interior can be folded outwards to open the housing, that the side piece (18) close to the interior engages the side piece (16) close to the frame only on the outside and embraces it in the manner of a clamp, and that the marginal sections (28, 30) of the side piece (18) close to the interior engage behind the marginal sections (22, 24) of the side piece (16) close to the frame to produce a clamping effect in this way.

2. The gas bag module according to Claim 1, **characterized in that** the side piece (16) close to the frame has a base plate (20) and that the marginal sections (28, 30) of the side piece (18) close to the interior in an installed state before an activation of the gas bag module (10) engage the rear face of the base plate (20).

3. The gas bag module according to any of the preceding claims, **characterized in that** the side pieces (16, 18) each have a C-shaped cross-section.

4. The gas bag module according to any of the preceding claims, **characterized in that** the marginal sections (22, 24, 28, 30) of the side pieces (16, 18) in the installed state are fixed to each other only by the clamp-like embracing.

5. The gas bag module according to any of the preceding claims, **characterized in that** the cross-section of the marginal sections (22, 24, 28, 30) is in the form of a circular arc.

6. The gas bag module according to Claim 5, **characterized in that** in the installed state the cross-sections of the respective overlapping marginal sections (22, 28; 24, 30) of the side piece (16) close to the frame and of the side piece (18) close to the interior are concentric circular arcs.

7. The gas bag module according to any of the preceding claims, **characterized in that** the hinge is a film hinge (34).

8. The gas bag module according to any of the preceding claims, **characterized in that** at least one device (36, 38, 40) is provided to fix the side pieces (16, 18) to each other while the side pieces are put together.

9. The gas bag module according to Claim 8, **characterized in that** the device (36, 38, 40) consists of domes (36) which are formed on one of the side pieces (16, 18) and have recesses (38), into which pins (40) formed on the other side piece can engage.

10. The gas bag module according to any of the preceding claims, **characterized in that** at least one fastening device is provided, via which the side pieces (16, 18) are connected with each other outside the overlapping marginal sections (22, 24, 28, 30).

11. The gas bag module according to Claim 10, **characterized in that** the fastening device is a clamping device (36, 38, 40).

12. The gas bag module according to any of Claims 10 and 11, **characterized in that** the side piece (16) close to the frame has domes with recesses and that the side piece (18) close to the interior can be fastened to the side piece (16) close to the frame by means of nails which can make a connection with the recesses (38).

## Revendications

1. Module de coussin à gaz pour un système de retenue des occupants d'un véhicule, en particulier un module de coussin à gaz latéral s'étendant le long du cadre de toit, comportant un coussin à gaz (14) et un boîtier avec deux parties latérales (16, 18) séparées qui définissent un canal d'éjection pour le coussin à gaz (14), une partie latérale (16) étant prévue à proximité du cadre et une partie latérale (18) à proximité de l'habitacle, lesdites parties latérales présentant chacune des tronçons de bord (22, 24, 28, 30) à leur extrémité supérieure et à leur extrémité inférieure, et la partie latérale (18) proche de l'habitacle étant réalisée élastique et présentant une forme adaptée à la forme de la partie latérale (16) proche du cadre, **caractérisé en ce que** la partie (18) proche de l'habitacle présente une charnière (34), de sorte qu'un tronçon de la partie latérale (18) proche de l'habitacle peut être dépliée vers l'extérieur pour ouvrir le boîtier, **en ce que** la partie latérale (18) proche de l'habitacle n'est en appui sur la partie latérale (16) proche du cadre que sur la face extérieure et enserre celle-ci à la manière d'une agrafe, et **en ce que** les tronçons de bord (28, 30) de la partie latérale proche de l'habitacle s'engagent derrière les tronçons de bord (22, 24) de la partie latérale (16) proche du cadre et produisent ainsi un effet d'agrafage.

2. Module de coussin à gaz selon la revendication 1, **caractérisé en ce que** la partie latérale (16) proche du cadre présente une plaque de base (20) et **en ce que** les tronçons de bord (28, 30) de la partie latérale (18) proche de l'habitacle s'engagent sur la face postérieure de la plaque de base (20) à un état de montage précédant un actionnement du module de coussin à gaz (10).

3. Module de coussin à gaz selon l'une des revendications précédentes, **caractérisé en ce que** les parties latérales (16, 18) présentent chacune une section transversale en forme de C.

4. Module de coussin à gaz selon l'une des revendications précédentes, **caractérisé en ce que** les tronçons de bord (22, 24, 28, 30) des parties latérales (16, 18) ne sont fixés l'un à l'autre à l'état de montage que par serrement à la manière d'une agrafe.

5. Module de coussin à gaz selon l'une des revendications précédentes, **caractérisé en ce que** la section transversale des tronçons de bord (22, 24, 28, 30) est en forme d'arc de cercle.

6. Module de coussin à gaz selon la revendication 5, **caractérisé en ce qu'**à l'état de montage, les sections transversales des tronçons de bord (22, 28 ; 24, 30) respectifs en chevauchement de la partie latérale (16) proche du cadre et de la partie latérale (18) proche de l'habitacle sont des arcs de cercle concentriques.

7. Module de coussin à gaz selon l'une des revendications précédentes, **caractérisé en ce que** la charnière est une charnière à bande (34).

8. Module de coussin à gaz selon l'une des revendications précédentes, **caractérisé en ce qu'**il est prévu au moins un dispositif (36, 38, 40) pour fixer l'une à l'autre les parties latérales (16, 18) pendant l'assemblage des parties latérales.

9. Module de coussin à gaz selon la revendication 8, **caractérisé en ce que** le dispositif (36, 38, 40) est constitué par des dômes (36) moulés sur une des parties latérales (16, 18) et présentant des évidements (38) dans lesquels peuvent s'engager des goupilles (40) moulées sur l'autre partie latérale.

10. Module de coussin à gaz selon l'une des revendications précédentes, **caractérisé en ce qu'**il est prévu au moins un dispositif de fixation par l'intermédiaire duquel les parties latérales (16, 18) sont reliées l'une à l'autre en dehors des tronçons de bord (22, 24, 28, 30) en chevauchement.

11. Module de coussin à gaz selon la revendication 10, **caractérisé en ce que** le dispositif de fixation est un dispositif de serrage (36, 38, 40).

12. Module de coussin à gaz selon l'une des revendications 10 et 11, **caractérisé en ce que** la partie latérale (16) proche du cadre présente des dômes avec des évidements, et **en ce que** la partie latérale (18) proche de l'habitacle peut être fixée à la partie latérale (16) proche du cadre par des clous qui peuvent établir une liaison avec les évidements (38).
